# EUROPÄISCHE PATENTANMELDUNG

(11) **EP 2 415 637 A1**
(43) Veröffentlichungstag der Anmeldung: **08.02.2012**
(21) Anmeldenummer: 11175819.9
(22) Anmeldetag: 28.07.2011
(51) Int. Cl.: B60Q 1/08

(54) **Steuervorrichtung für ein Fahrzeugscheinwerfersystem**

(30) Priorität: 03.08.2010 DE 102010038841
(71) Anmelder: DEERE & COMPANY, Moline, Illinois 61265-8098 (US)
(72) Erfinder: Hagner, Thorsten, 68549 Ilvesheim (DE)
(74) Vertreter: Dehnhardt, Florian Christopher

(57) **Zusammenfassung**

Eine Steuervorrichtung (10) für ein Fahrzeugscheinwerfersystem (12) umfasst eine Navigationseinrichtung (14) zur Erfassung geografischer Positionsdaten und eine Kontrolleinheit (16) zur Anpassung der Beleuchtungscharakteristik des Fahrzeugscheinwerfersystems (12) in Abhängigkeit der erfassten geografischen Positionsdaten, wobei die Anpassung der Beleuchtungscharakteristik unter Einhaltung fest vorgegebener Beleuchtungseinstellungen erfolgt, wenn sich aufgrund der erfassten geografischen Positionsdaten ergibt, dass das Fahrzeugscheinwerfersystem (12) im öffentlichen Straßenverkehr betrieben wird. Erfindungsgemäß erfolgt die Anpassung der Beleuchtungscharakteristik unter weitergehender Berücksichtigung fahrerseitig vorgegebener Beleuchtungseinstellungen, wenn sich aufgrund der erfassten Positionsdaten ergibt, dass das Fahrzeugscheinwerfersystem (12) außerhalb des öffentlichen Straßenverkehrs betrieben wird.

## Beschreibung

Die Erfindung betrifft eine Steuervorrichtung für ein Fahrzeugscheinwerfersystem, mit einer Navigationseinrichtung zur Erfassung geografischer Positionsdaten und mit einer Kontrolleinheit zur Anpassung der Beleuchtungscharakteristik des Fahrzeugscheinwerfersystems in Abhängigkeit der erfassten geografischen Positionsdaten, wobei die Anpassung der Beleuchtungscharakteristik unter Einhaltung fest vorgegebener Beleuchtungseinstellungen erfolgt, wenn sich aufgrund der erfassten geografischen Positionsdaten ergibt, dass das Fahrzeugscheinwerfersystem im öffentlichen Straßenverkehr betrieben wird.

Eine derartige Vorrichtung geht beispielsweise aus der DE 10 2006 022 022 A1 hervor, wobei diese zur Steuerung einer von einem Frontscheinwerfer bereitgestellten Lichtfunktion in einem Straßenfahrzeug dient. Die Vorrichtung umfasst neben einem Stellglied zur Steuerung der Lichtfunktion eine Recheneinheit, die durch Abgleich sensorisch erfasster Positionsdaten mit Daten einer digitalen Karte die befahrene Straßenklasse und/oder deren Verlauf ermittelt und durch geeignete Betätigung des Stellglieds eine der ermittelten Straßenklasse und/oder deren Verlauf angepasste selbsttätige Einstellung der Lichtfunktion vornimmt. Auf diese Weise wird der Fahrer zumindest bei Fahrten im öffentlichen Straßenverkehr von einer manuell vorzunehmenden Einstellung der Lichtfunktion entlastet.

Eine weitergehende Unterstützung des Fahrers außerhalb des öffentlichen Straßenverkehrs ist nicht vorgesehen.

Es ist daher Aufgabe der vorliegenden Erfindung, eine Steuervorrichtung der eingangs genannten Art dahingehend weiterzubilden, dass diese den Fahrer auch außerhalb des öffentlichen Straßenverkehrs weitergehend zu unterstützen vermag.

Diese Aufgabe wird durch eine Steuervorrichtung mit den Merkmalen des Patentanspruchs 1 gelöst.

Die Steuervorrichtung für ein Fahrzeugscheinwerfersystem umfasst eine Navigationseinrichtung zur Erfassung geografischer Positionsdaten und eine Kontrolleinheit zur Anpassung der Beleuchtungscharakteristik des Fahrzeugscheinwerfersystems in Abhängigkeit der erfassten geografischen Positionsdaten, wobei die Anpassung der Beleuchtungscharakteristik unter Einhaltung fest vorgegebener Beleuchtungseinstellungen erfolgt, wenn sich aufgrund der erfassten geografischen Positionsdaten ergibt, dass das Fahrzeugscheinwerfersystem im öffentlichen Straßenverkehr betrieben wird. Erfindungsgemäß erfolgt die Anpassung der Beleuchtungscharakteristik unter weitergehender Berücksichtigung fahrerseitig vorgegebener Beleuchtungseinstellungen, wenn sich aufgrund der erfassten Positionsdaten ergibt, dass das Fahrzeugscheinwerfersystem außerhalb des öffentlichen Straßenverkehrs betrieben wird.

Die für den Betrieb im öffentlichen Straßenverkehr zwingend einzuhaltenden und insofern fest vorgegebenen Beleuchtungseinstellungen ergeben sich hierbei aufgrund einschlägiger gesetzlicher Bestimmungen, wobei in diesem Zusammenhang insbesondere die in Deutschland geltende Straßenverkehrsordnung (StVO) sowie die in Bezug auf die technische Ausgestaltung des Fahrzeugscheinwerfersystems zu beachtenden ECE-Vorschriften (ECE - Economic Commission for Europe) von Bedeutung sind. Verlässt der Fahrer hingegen den Bereich des öffentlichen Straßenverkehrs, was die Kontrolleinheit durch Auswertung der mittels der Navigationseinrichtung erfassten geografischen Positionsdaten erkennt, so ist die Anpassung der Beleuchtungscharakteristik des Fahrzeugscheinwerfersystems nicht länger an derartige Vorgaben gebunden. Vielmehr kann die Anpassung der Beleuchtungscharakteristik dann - sofern dies der Fahrer wünscht - ausschließlich oder zusätzlich unter der weitergehenden Berücksichtigung der fahrerseitig vorgegebenen Beleuchtungseinstellungen erfolgen.

Vorteilhafte Weiterbildungen der erfindungsgemäßen Steuervorrichtung gehen aus den Unteransprüchen hervor.

Vorzugsweise umfasst das Fahrzeugscheinwerfersystem eine Straßenbeleuchtung, eine Umfeldbeleuchtung und/oder eine Arbeitsbeleuchtung. Die Straßenbeleuchtung, Umfeldbeleuchtung und/oder Arbeitsbeleuchtung kann durch eine oder mehrere voneinander unabhängige Scheinwerfergruppen gebildet sein. Insbesondere ist es möglich, dass es sich bei der Straßenbeleuchtung um eine Anordnung mehrerer Frontscheinwerfer im vorderen Bereich einer Fahrzeugkühlerhaube bzw. um eine Anordnung von gegenüber den Frontscheinwerfern versetzt angeordneten Wiederholscheinwerfern im Dachbereich einer Fahrerkabine handelt, während die Umfeldbeleuchtung und/oder die Arbeitsbeleuchtung eine Vielzahl von im äußeren Bereich einer Fahrzeugkarosserie bzw. der Fahrerkabine verteilt angeordneten Zusatzscheinwerfern umfasst. Eine Verwendung von Wiederholscheinwerfern ist insbesondere dann erforderlich, wenn das Frontscheinwerfersystem Bestandteil eines landwirtschaftlichen Nutzfahrzeugs ist und die im vorderen Bereich der Fahrzeugkühlerhaube angebrachten Frontscheinwerfer durch Frontanbaugeräte oder dergleichen verdeckt sind.

Zur Anpassung der Beleuchtungscharakteristik des Fahrzeugscheinwerfersystems kann eine Leuchtstärkensteuerung, eine Lichtmustersteuerung und/oder eine Lichtfarbensteuerung vorgesehen sein. Genauer gesagt können die von dem Fahrzeugscheinwerfersystem umfassten Scheinwerfer mit fahrzeugüblichen Halogen-, Xenon- und/oder LED-Leuchtmitteln ausgestattet sein, deren Beleuchtungscharakteristik hinsichtlich Leuchtstärke, Lichtverteilung und/oder Lichtfarbe mittels eines von der Kontrolleinheit betätigbaren Stellglieds veränderbar ist. Bei dem Stellglied handelt es sich beispielsweise um einen elektrischen Leistungsregler, eine elektrisch verstellbare Blenden- bzw. Spiegelanordnung, oder einen elektromechanischen Aktuator zur Beeinflussung der Scheinwerferorientierung. Hierbei ist es denkbar, die Scheinwerfer und Leuchtmittel räumlich getrennt voneinander anzuordnen, wobei die Zuleitung des von den Leuchtmitteln erzeugten Lichts zu den verschiedenen Scheinwerfern mittels optischer Lichtleiteinrichtungen erfolgt.

Des Weiteren ist es möglich, dass die Navigationseinrichtung einen GPS-Empfänger und einen Kartenspeicher aufweist, wobei letzterer digitalisierte Straßen- bzw. Geländeinformationen enthält. Ob das Fahrzeugscheinwerfersystem im öffentlichen Straßenverkehr oder aber außerhalb betrieben wird, lässt sich in diesem Fall durch Abgleich der mittels des GPS-Empfängers erfassten geografischen Positionsdaten bzw. der sich daraus ergebenden Fahrzeugposition mit den im Kartenspeicher enthaltenen Straßen- bzw. Geländeinformationen ermitteln.

Hierbei können die fest vorgegebenen Beleuchtungseinstellungen durch eine aus den erfassten geografischen Positionsdaten abgeleitete Straßenklasse und/oder einen aus den erfassten geografischen Positionsdaten abgeleiteten Straßenverlauf charakterisiert sein. Erkennt die Kontrolleinheit beispielsweise aufgrund der befahrenen Straßenklasse, dass das Fahrzeugscheinwerfersystem unzulässigerweise mit eingeschaltetem Fernlicht innerhalb einer geschlossenen Ortschaft betrieben wird, so kann das Fahrzeugscheinwerfersystem durch entsprechende Anpassung der Beleuchtungscharakteristik selbsttätig abgeblendet werden. Ähnliche Betrachtungen gelten für den Fall einer sich aufgrund des aktuellen Straßenverlaufs ergebenden Kurvenfahrt, bei der zur Bereitstellung eines adaptiven Kurvenlichts eine der Kurvenkrümmung selbsttätig folgende Ausleuchtung des vorausliegenden Straßenverlaufs durch entsprechende Anpassung der Beleuchtungscharakteristik vorgesehen sein kann.

Zur fahrerseitigen Vorgabe der Beleuchtungseinstellungen kann eine in einer Fahrerkabine angeordnete Bedieneinrichtung vorgesehen sein. Bei der Bedieneinrichtung handelt es sich beispielsweise um einen berührungsempfindlichen Bildschirm, einen digitalen Drehdrücksteller zur Navigation innerhalb einer menübasierten Benutzeroberfläche, oder eine Anordnung konventioneller elektromechanischer Bedienelemente, wie Schalter, Taster oder Drehsteller.

Vorzugsweise legt die Kontrolleinheit die fahrerseitig vorgegebenen Beleuchtungseinstellungen auf Veranlassung des Fahrers in einer als Speicherkarte ausgebildeten Speichereinheit ab. Bei der Speicherkarte handelt es sich um einen wiederbeschreibbaren Flash-Speicher, der über eine reversible Schnittstelle, im einfachsten Fall über eine elektrische Steckverbindung mit der Kontrolleinheit kommuniziert. Die reversible Schnittstelle erlaubt es, die Speicherkarte aus der Steuervorrichtung zu entnehmen und gegen eine andere Speicherkarte auszutauschen. Mit anderen Worten ist es möglich, jedem Fahrer eine eigene Speicherkarte zur Verwaltung seiner individuellen Beleuchtungseinstellungen zuzuordnen. Bei dem Flash-Speicher handelt es sich typischerweise um eine Multimedia Card (MMC), eine Secure Digital Memory Card (SD), eine micro Secure Digital Memory Card (micro SD), oder einen Memory Stick (MS), wobei letzterer über einen Universal Serial Bus (USB) mit der Kontrolleinheit verbindbar sein kann.

Wird die erfindungsgemäße Steuervorrichtung in einem landwirtschaftlichen Nutzfahrzeug eingesetzt, so können die fahrerseitig vorgegebenen Beleuchtungseinstellungen verschiedene landwirtschaftsbezogene Beleuchtungssituationen betreffen, wie sie beispielsweise beim Befahren von Feld- und Wirtschaftswegen, zur Ausführung von Lade- und Entladearbeiten auf einem Bauernhof, zum An- und Abkuppeln von Anbaugeräten, zur Durchführung von Feld- und Forstarbeiten, oder dergleichen auftreten. Zu diesem Zweck lassen sich die für die jeweilige Beleuchtungssituation fahrerseitig vorgegebenen Beleuchtungseinstellungen gemeinsam mit einem Positionsmarker, der eine aus den erfassten geografischen Positionsdaten abgeleitete Fahrzeugposition wiedergibt, in der Speichereinheit ablegen. Die solchermaßen abgespeicherten Beleuchtungseinstellungen werden anschließend von der Kontrolleinheit bei (erneutem) Anfahren der betreffenden Fahrzeugposition selbsttätig - oder nach vorheriger Bestätigung durch den Fahrer - aus der Speichereinheit abgerufen und zur selbsttätigen Anpassung der Beleuchtungscharakteristik des Fahrzeugscheinwerfersystems herangezogen. Zusätzlich oder alternativ kann auch die Abspeicherung eines Zeitmarkers erfolgen, der eine vom Fahrer vorgegebene Tageszeit wiedergibt, zu der die fahrerseitig vorgegebenen Beleuchtungseinstellungen abrufbar sein sollen.

Mit anderen Worten besteht also die Möglichkeit, dass die fahrerseitig vorgegebenen Beleuchtungseinstellungen durch einen vom Fahrer für eine gewünschte Beleuchtungscharakteristik gesetzten Positions- und/oder Zeitmarker charakterisiert sind.

Des Weiteren ist es denkbar, dass sich eine für eine bestimmte Arbeitsfunktion des landwirtschaftlichen Nutzfahrzeugs vorgegebene Beleuchtungseinstellung in der Speichereinheit ablegen lässt. Die Arbeitsfunktion kann beispielsweise mit der Verwendung eines bestimmten Anbaugeräts verknüpft sein. In diesem Fall kann dem Anbaugerät ein geeignetes Identifikationsmerkmal zugeordnet sein, das es der Kontrolleinheit ermöglicht, die betreffende Arbeitsfunktion zu identifizieren sowie die zugehörigen Beleuchtungseinstellungen aus der Speichereinheit zur selbsttätigen Anpassung der Beleuchtungscharakteristik des Fahrzeugscheinwerfersystems abzurufen. Bei dem Identifikationsmerkmal handelt es sich insbesondere um eine beim Anschließen bzw. Ankoppeln des Anbaugeräts von der Kontrolleinheit über einen Datenbus abgefragte digitale Kennung.

Insofern können die fahrerseitig vorgegebenen Beleuchtungseinstellungen zusätzlich oder alternativ durch eine mit einem landwirtschaftlichen Arbeitsgerät auszuführende Arbeitsfunktion charakterisiert sein.

An dieser Stelle sei angemerkt, dass die erfindungsgemäße Steuervorrichtung nicht auf eine Verwendung in landwirtschaftlichen Nutzfahrzeugen beschränkt ist. Vielmehr kann diese auch im Bau- bzw. Forstmaschinenbereich oder auch in Zusammenhang mit sogenannten kommunalen Arbeitsfahrzeugen, also Schneepflügen, Stra-βenreinigungsmaschinen, Entsorgungs- und Müllfahrzeugen oder dergleichen, eingesetzt werden.

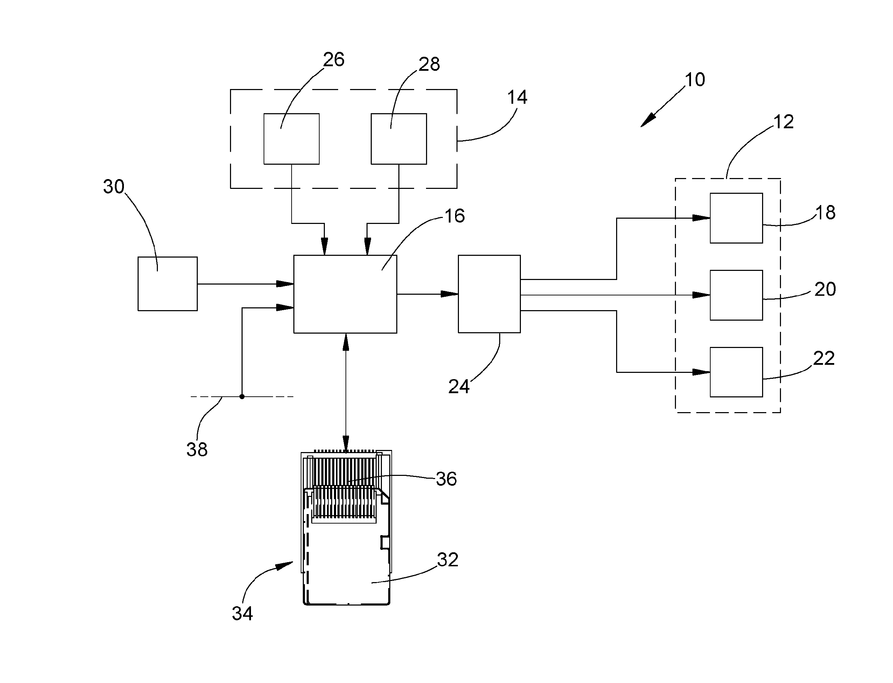

Die erfindungsgemäße Steuervorrichtung wird im Folgenden anhand der beigefügten Zeichnung näher erläutert. Dabei zeigt die einzige Figur ein Ausführungsbeispiel der erfindungsgemäßen Steuervorrichtung für ein Fahrzeugscheinwerfersystem.

Die in einem nicht dargestellten landwirtschaftlichen Nutzfahrzeug angeordnete Steuervorrichtung 10 für ein Fahrzeugscheinwerfersystem 12 umfasst eine Navigationseinrichtung 14 zur Erfassung geografischer Positionsdaten und eine Kontrolleinheit 16 zur Anpassung der Beleuchtungscharakteristik des Fahrzeugscheinwerfersystems 12 in Abhängigkeit der erfassten geografischen Positionsdaten.

Erfindungsgemäß unterscheidet die Kontrolleinheit 16 im Hinblick auf die Anpassung der Beleuchtungscharakteristik zwischen einem Betrieb im öffentlichen Straßenverkehr und einem Betrieb außerhalb des öffentlichen Straßenverkehrs. So erfolgt seitens der Kontrolleinheit 16 einerseits die Anpassung der Beleuchtungscharakteristik unter Einhaltung fest vorgegebener Beleuchtungseinstellungen, wenn diese aufgrund der erfassten geografischen Positionsdaten feststellt, dass das Fahrzeugscheinwerfersystem 12 im öffentlichen Straßenverkehr betrieben wird. Andererseits erfolgt seitens der Kontrolleinheit 16 die Anpassung der Beleuchtungscharakteristik unter weitergehender Berücksichtigung fahrerseitig vorgegebener Beleuchtungseinstellungen, wenn diese aufgrund der erfassten Positionsdaten feststellt, dass das Fahrzeugscheinwerfersystem 12 außerhalb des öffentlichen Straßenverkehrs betrieben wird.

Die für den Betrieb im öffentlichen Straßenverkehr zwingend einzuhaltenden und insofern fest vorgegebenen Beleuchtungseinstellungen ergeben sich hierbei aufgrund einschlägiger gesetzlicher Bestimmungen, wobei in diesem Zusammenhang insbesondere die in Deutschland geltende Straßenverkehrsordnung (StVO) sowie die in Bezug auf die technische Ausgestaltung des Fahrzeugscheinwerfersystems 12 zu beachtenden ECE-Vorschriften (ECE - Economic Commission for Europe) von Bedeutung sind. Verlässt der Fahrer hingegen den Bereich des öffentlichen Straßenverkehrs, was die Kontrolleinheit 16 durch Auswertung der mittels der Navigationseinrichtung 14 erfassten geografischen Positionsdaten erkennt, so ist die Anpassung der Beleuchtungscharakteristik des Fahrzeugscheinwerfersystems 12 nicht länger an derartige Vorgaben gebunden. Vielmehr kann die Anpassung der Beleuchtungscharakteristik dann - ausschließlich oder zusätzlich sofern dies der Fahrer wünscht - unter der weitergehenden Berücksichtigung der fahrerseitig vorgegebenen Beleuchtungseinstellungen erfolgen.

Beispielsgemäß umfasst das dargestellte Fahrzeugscheinwerfersystem 12 eine Straßenbeleuchtung 18, eine Umfeldbeleuchtung 20 und/oder eine Arbeitsbeleuchtung 22. Die Straßenbeleuchtung 18, Umfeldbeleuchtung 20 und/oder Arbeitsbeleuchtung 22 ist durch mehrere voneinander unabhängige Scheinwerfergruppen gebildet. Bei der Straßenbeleuchtung 18 handelt es sich um eine Anordnung mehrerer Frontscheinwerfer im vorderen Bereich einer Fahrzeugkühlerhaube des landwirtschaftlichen Nutzufahrzeugs bzw. um eine Anordnung von gegenüber den Frontscheinwerfern versetzt angeordneten Wiederholscheinwerfern im Dachbereich einer Fahrerkabine, während die Umfeldbeleuchtung 20 und/oder die Arbeitsbeleuchtung 22 eine Vielzahl von im äußeren Bereich einer Fahrzeugkarosserie bzw. der Fahrerkabine des landwirtschaftlichen Nutzfahrzeugs verteilt angeordneten Zusatzscheinwerfern umfasst.

Zur Anpassung der Beleuchtungscharakteristik des Fahrzeugscheinwerfersystems 12 ist eine Leuchtstärkensteuerung, eine Lichtmustersteuerung und/oder eine Lichtfarbensteuerung vorgesehen. Genauer gesagt sind die von dem Fahrzeugscheinwerfersystem 12 umfassten Scheinwerfer mit fahrzeugüblichen Halogen-, Xenon- und/oder LED-Leuchtmitteln ausgestattet, deren Beleuchtungscharakteristik hinsichtlich Leuchtstärke, Lichtverteilung und/oder Lichtfarbe mittels eines von der Kontrolleinheit 16 betätigbaren Stellglieds 24 veränderbar ist. Bei dem nicht näher dargestellten Stellglied 24 handelt es sich um einen elektrischen Leistungsregler, eine elektrisch verstellbare Blenden- bzw. Spiegelanordnung und/oder einen Aktuator zur Beeinflussung der Scheinwerferorientierung.

Die Navigationseinrichtung 14 weist einen GPS-Empfänger 26 und einen Kartenspeicher 28 auf, wobei letzterer digitalisierte Straßen- bzw. Geländeinformationen enthält. Ob das Fahrzeugscheinwerfersystem 12 im öffentlichen Straßenverkehr oder aber außerhalb betrieben wird, wird von der Kontrolleinheit 16 durch Abgleich der mittels des GPS-Empfängers 26 erfassten geografischen Positionsdaten bzw. der sich daraus ergebenden Fahrzeugposition mit den im Kartenspeicher 28 enthaltenen digitalisierten Straßen- bzw. Geländeinformationen ermittelt.

Hierbei sind die fest vorgegebenen Beleuchtungseinstellungen durch eine aus den erfassten geografischen Positionsdaten abgeleitete Straßenklasse und/oder durch einen aus den erfassten geografischen Positionsdaten abgeleiteten Straßenverlauf charakterisiert. Erkennt die Kontrolleinheit 16 beispielsweise aufgrund der befahrenen Straßenklasse, dass das Fahrzeugscheinwerfersystem 12 unzulässigerweise mit eingeschaltetem Fernlicht innerhalb einer geschlossenen Ortschaft betrieben wird, so wird das Fahrzeugscheinwerfersystem 12 durch entsprechende Anpassung der Beleuchtungscharakteristik selbsttätig abgeblendet. Ähnliche Betrachtungen gelten für den Fall einer sich aufgrund des aktuellen Straßenverlaufs ergebenden Kurvenfahrt, bei der eine der Kurvenkrümmung selbsttätig folgende Ausleuchtung des vorausliegenden Straßenverlaufs durch entsprechende Anpassung der Beleuchtungscharakteristik vorgesehen ist.

Des Weiteren ist zur fahrerseitigen Vorgabe der Beleuchtungseinstellungen eine in der Fahrerkabine des landwirtschaftlichen Nutzfahrzeugs angeordnete Bedieneinrichtung 30 in Gestalt eines berührungsempfindlichen Bildschirms vorgesehen.

Die über die Bedieneinrichtung 30 fahrerseitig vorgegebenen Beleuchtungseinstellungen werden von der Kontrolleinheit 16 auf Veranlassung des Fahrers in einer als Speicherkarte 32 ausgebildeten Speichereinheit 34 abgelegt. Bei der Speicherkarte 32 handelt es sich um einen wiederbeschreibbaren Flash-Speicher in Gestalt einer handelsüblichen Secure Digital Memory Card (SD), der über eine reversible Schnittstelle 36, im vorliegenden Fall über eine elektrische Steckverbindung mit der Kontrolleinheit 16 in Verbindung steht. Die reversible Schnittstelle 36 erlaubt es, die Speicherkarte 32 aus der Steuervorrichtung 10 zu entnehmen und gegen eine andere Speicherkarte auszutauschen. Mit anderen Worten ist es möglich, jedem Fahrer des landwirtschaftlichen Nutzfahrzeugs eine eigene Speicherkarte 32 zur Verwaltung seiner individuellen Beleuchtungseinstellungen zuzuordnen.

Die fahrerseitig vorgegebenen Beleuchtungseinstellungen betreffen verschiedene landwirtschaftsbezogene Beleuchtungssituationen, wie sie beispielsweise beim Befahren von Feld- und Wirtschaftswegen, zur Ausführung von Lade- und Entladearbeiten auf einem Bauernhof, zum An- und Abkuppeln von Anbaugeräten, zur Durchführung von Feld- und Forstarbeiten, oder dergleichen auftreten. Zu diesem Zweck lassen sich die für die jeweilige Beleuchtungssituation fahrerseitig vorgegebenen Beleuchtungseinstellungen über die Bedieneinrichtung 30 gemeinsam mit einem Positionsmarker, der eine aus den erfassten geografischen Positionsdaten abgeleitete Fahrzeugposition wiedergibt, in der Speichereinheit 34 ablegen. Die solchermaßen abgespeicherten Beleuchtungseinstellungen werden anschließend von der Kontrolleinheit 16 bei (erneutem) Anfahren der betreffenden Fahrzeugposition selbsttätig - oder nach vorheriger Bestätigung durch den Fahrer - aus der Speichereinheit 34 abgerufen und zur selbsttätigen Anpassung der Beleuchtungscharakteristik des Fahrzeugscheinwerfersystems 12 herangezogen. Zusätzlich oder alternativ erfolgt über die Bedieneinrichtung 30 die Abspeicherung eines Zeitmarkers, der eine vom Fahrer vorgegebene Tageszeit wiedergibt, zu der die fahrerseitig vorgegebenen Beleuchtungseinstellungen abrufbar sein sollen.

Optional lässt sich eine für eine bestimmte Arbeitsfunktion des landwirtschaftlichen Nutzfahrzeugs vorgegebene Beleuchtungseinstellung in der Speichereinheit 34 ablegen. Die Arbeitsfunktion ist hierbei mit der Verwendung eines bestimmten Anbaugeräts verknüpft. Dementsprechend ist dem Anbaugerät ein geeignetes Identifikationsmerkmal zugeordnet, das es der Kontrolleinheit 16 ermöglicht, die betreffende Arbeitsfunktion zu identifizieren sowie die zugehörigen Beleuchtungseinstellungen aus der Speichereinheit 34 zum Zwecke der selbsttätigen Anpassung der Beleuchtungscharakteristik des Fahrzeugscheinwerfersystems 12 abzurufen. Bei dem Identifikationsmerkmal handelt es sich um eine beim Anschließen bzw. Ankoppeln des Anbaugeräts von der Kontrolleinheit 16 über einen Datenbus 38 abgefragte digitale Kennung.

Mit anderen Worten sind also die fahrerseitig vorgegebenen Beleuchtungseinstellungen durch einen vom Fahrer für eine gewünschte Beleuchtungscharakteristik gesetzten Positions- und/oder Zeitmarker, und optional durch eine mit einem landwirtschaftlichen Arbeitsgerät auszuführende Arbeitsfunktion charakterisiert.

## Patentansprüche

1. Steuervorrichtung für ein Fahrzeugscheinwerfersystem mit einer Navigationseinrichtung (14) zur Erfassung geografischer Positionsdaten und mit einer Kontrolleinheit (16) zur Anpassung der Beleuchtungscharakteristik des Fahrzeugscheinwerfersystems (12) in Abhängigkeit der erfassten geografischen Positionsdaten, wobei die Anpassung der Beleuchtungscharakteristik unter Einhaltung fest vorgegebener Beleuchtungseinstellungen erfolgt, wenn sich aufgrund der erfassten geografischen Positionsdaten ergibt, dass das Fahrzeugscheinwerfersystem (12) im öffentlichen Straßenverkehr betrieben wird, **dadurch gekennzeichnet, dass** die Anpassung der Beleuchtungscharakteristik unter weitergehender Berücksichtigung fahrerseitig vorgegebener Beleuchtungseinstellungen erfolgt, wenn sich aufgrund der erfassten Positionsdaten ergibt, dass das Fahrzeugscheinwerfersystem (12) au-βerhalb des öffentlichen Straßenverkehrs betrieben wird.

2. Steuervorrichtung nach Anspruch 1, **dadurch gekennzeichnet, dass** das Fahrzeugscheinwerfersystem (12) eine Straßenbeleuchtung (18), eine Umfeldbeleuchtung (20) und/oder eine Arbeitsbeleuchtung (22) umfasst.

3. Steuervorrichtung nach Anspruch 1 oder 2, **dadurch gekennzeichnet, dass** zur Anpassung der Beleuchtungscharakteristik des Fahrzeugscheinwerfersystems (12) eine Leuchtstärkensteuerung, eine Lichtmustersteuerung und/oder eine Lichtfarbensteuerung vorgesehen ist.

4. Steuervorrichtung nach einem der Ansprüche 1 bis 3, **dadurch gekennzeichnet, dass** die Navigationseinrichtung (14) einen GPS-Empfänger (26) und einen Kartenspeicher (28) aufweist.

5. Steuervorrichtung nach einem der Ansprüche 1 bis 4, **dadurch gekennzeichnet, dass** die fest vorgegebenen Beleuchtungseinstellungen durch eine aus den erfassten geografischen Positionsdaten abgeleitete Straßenklasse und/oder einen aus den erfassten geografischen Positionsdaten abgeleiteten Straßenverlauf charakterisiert sind.

6. Steuervorrichtung nach einem der Ansprüche 1 bis 5, **dadurch gekennzeichnet, dass** zur fahrerseitigen Vorgabe der Beleuchtungseinstellungen eine in einer Fahrerkabine angeordnete Bedieneinrichtung (30) vorgesehen ist.

7. Steuervorrichtung nach einem der Ansprüche 1 bis 6, **dadurch gekennzeichnet, dass** die Kontrolleinheit (16) die fahrerseitig vorgegebenen Beleuchtungseinstellungen auf Veranlassung des Fahrers in einer als Speicherkarte (32) ausgebildeten Speichereinheit (34) ablegt.

8. Steuervorrichtung nach einem der Ansprüche 1 bis 7, **dadurch gekennzeichnet, dass** die fahrerseitig vorgegebenen Beleuchtungseinstellungen verschiedene landwirtschaftsbezogene Beleuchtungssituationen betreffen.

9. Steuervorrichtung nach einem der Ansprüche 1 bis 8, **dadurch gekennzeichnet, dass** die fahrerseitig vorgegebenen Beleuchtungseinstellungen durch einen vom Fahrer für eine gewünschte Beleuchtungscharakteristik gesetzten Positions- und/oder Zeitmarker charakterisiert sind.

10. Steuervorrichtung nach einem der Ansprüche 1 bis 9, **dadurch gekennzeichnet, dass** die fahrerseitig vorgegebenen Beleuchtungseinstellungen durch eine mit einem landwirtschaftlichen Arbeitsgerät auszuführende Arbeitsfunktion charakterisiert sind.

11. Fahrzeug, insbesondere landwirtschaftliches Nutzfahrzeug, mit einer Steuervorrichtung (10) nach einem der Ansprüche 1 bis 10.
